# EUROPEAN PATENT SPECIFICATION

(11) **EP 3 838 630 B1**
(45) Date of publication and mention of the grant of the patent: **15.03.2023**
(21) Application number: 20208916.5
(22) Date of filing: 20.11.2020
(51) Int. Cl.: B60C 13/02, B60C 9/02, B60C 15/00

(54) **PNEUMATIC TIRE**
LUFTREIFEN
PNEUMATIQUE

(30) Priority: 19.12.2019 JP 2019229569
(43) Date of publication of application: 23.06.2021
(73) Proprietor: Sumitomo Rubber Industries, Ltd., Kobe-shi, Hyogo-ken 651-0072 (JP)
(72) Inventor: MIZOKAWA, Hiroki, Kobe-shi, Hyogo 651-0072 (JP); ISHIGAKI, Yuichi, Kobe-shi, Hyogo 651-0072 (JP)
(74) Representative: Manitz Finsterwald Patent- und Rechtsanwaltspartnerschaft mbB

(56) References cited:
- EP-A2- 2 974 890
- JP-A- H0 858 318
- JP-A- 2014 223 914

## Description

### [Technical Field]

The present invention relates to a pneumatic tire.

### [Background Art]

JP 2019-073119 A has proposed a pneumatic tire having a buttress portion with a raised portion. The raised portion is helpful for improving cut resistance performance of the buttress portion (a region on a tread portion side of each of sidewall portions extending from both ends of the tread portion in a tire radial direction).

EP 2 974 890 A2 discloses a tire according to the preamble of claim 1. Another tire having a side protector formed on the side walls is disclosed in JP H08-58318 A, the side protector being provided with a protection layer constituted of steel plates or thick steel wire.

### [Summary of the Invention]

### [Problems to be solved by the Invention]

In the pneumatic tire as described above, the cut tends to occur more easily in the region on the inner side in the tire radial direction than the raised portions of the sidewall portions. On the other hand, it is also necessary to ensure basic durability for this type of pneumatic tire.

The present invention was made in view of the above, and a primary object thereof is to provide a pneumatic tire with improved cut resistance performance in the sidewall portions.

### [Means for Solving the Problems]

The present invention is a pneumatic tire including a tread portion, a pair of sidewall portions, a pair of bead portions each having a bead core embedded therein, and a carcass extending between the bead portions in a toroidal manner, wherein a buttress portion of at least one of the pair of the sidewall portions is provided with at least one raised portion protruding outward in a tire axial direction, the carcass includes a main body portion and a pair of turned up portions, the main body portion extends between the bead cores of the pair of the bead portions, each of the pair of the turned up portions is turned up around the respective bead core to extend outward in a tire radial direction, in the sidewall portion which is provided with the at least one raised portion, the turned up portion is arranged so as to overlap with the raised portion in the tire radial direction, and a length in the tire radial direction of an overlapping portion of the turned up portion and the raised portion is 5% or more and 40% or less of a tire section height.

In the present invention, it is preferred that in each of the sidewall portions, a distance in the tire radial direction between a bead baseline and an outer end in the tire radial direction of the respective turned up portion is 77% or less of the tire section height.

In the present invention, it is preferred that a distance in the tire radial direction between an outer end in the tire radial direction of the tread portion and an inner end in the tire radial direction of the raised portion is 35% or more of the tire section height.

In the present invention, it is preferred that a minimum rubber thickness between an outer surface of the carcass and an outer surface of each of the sidewall portions is 5% or less of the tire section height.

In the present invention, it is preferred that the at least one raised portion protrudes outward in the tire axial direction from a reference profile of the at least one of the pair of the sidewall portions, and a thickness of the raised portion from the reference profile is 2.0 mm or more and 5.0 mm or less.

In the present invention, the at least one of the pair of the sidewall portions is provided with a plurality of the raised portions arranged in the tire circumferential direction, each of the raised portions is formed so as to include a 75% position which is spaced away radially outward from a bead baseline by 75% of the tire section height, and a total of lengths in the tire circumferential direction of the raised portions is 30% or more and 80% or less of a circumferential length at the 75% position.

### [Effects of the Invention]

In the pneumatic tire according to the present invention, at least one of the turned up portions of the carcass is arranged so as to overlap with the raised portion in the tire radial direction. Thereby, the cut resistance performance of the at least one of the sidewall portions is improved.

In the present invention, the length in the tire radial direction of the overlapping portion of the turned up portion and the raised portion is 5% or more and 40% or less of the tire section height. Thereby, the cut resistance performance on the radially inner side of the raised portion is sufficiently improved, while end portions of the turned up portions are suppressed from being positioned excessively close to end portions in the tire axial direction of the tread portion which deform largely.

### [Brief Description of the Drawings]

[FIGURE 1] a lateral cross-sectional view of a tire according to an embodiment of the present invention.
[FIGURE 2] an enlarged view of one of the sidewall portions and one of bead portions of FIGURE 1.
[FIGURE 3] a cross-sectional view taken along A-A line of FIGURE 2.

### [Mode for carrying out the invention]

An embodiment of the present invention will now be described in conjunction with accompanying drawings.

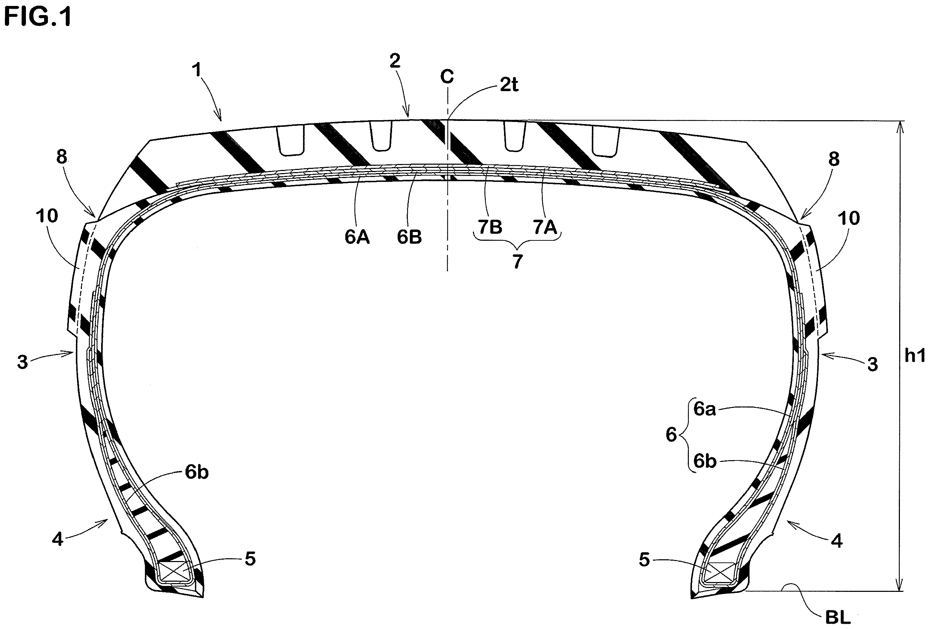

FIGURE 1 is a lateral cross-sectional view of a pneumatic tire 1 of the present embodiment in a standard state (hereinafter, may be simply referred to as "tire"). It should be noted that FIGURE 1 is a meridian section passing through a rotational axis of the tire. As shown in FIGURE 1, the tire 1 of the present embodiment is suitably used for SUVs designed for driving on both paved roads and rough terrain, for example. However, the present invention is not limited to such an embodiment.

The "standard state" is a state in which the tire is mounted on a standard rim (not shown), inflated to a standard inner pressure, and loaded with no tire load. Hereinafter, unless otherwise noted, the dimensions and the like of various parts of the tire are values measured in the standard state.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

The tire 1 of the present embodiment is provided with a tread portion 2, a pair of sidewall portions 3, a pair of bead portions 4 each having a bead core 5 embedded therein, and a carcass 6 extending between the bead portions 4 in a toroidal manner.

A buttress portion 8 of at least one of the pair of the sidewall portions 3 is formed with at least one raised portion 10 protruding outward in a tire axial direction. In the present embodiment, the raised portion 10 is provided in the buttress portions 8 of both sidewall portions 3. Further, a plurality of the raised portions 10 is provided in a tire circumferential direction in each of the sidewall portions 3. The raised portions 10 protrude outward in the tire axial direction from a reference profile of each of the sidewall portions 3. Therefore, a design element, which is drawn by the raised portions 10, is formed on an outer surface of each of the sidewall portions 3. The design element can be configured in various forms such as letters, figures, symbols, geometric patterns, and the like, for example. It should be noted that the reference profile is a contour of the outer surface of each of the sidewall portions 3 when the raised portions 10 are not provided, and is convexly and smoothly curved outward in the tire axial direction.

The raised portion 10 is helpful for improving the cut resistance performance of the sidewall portions 3. Further, in the case of a tire running on a muddy road, the raised portions 10 shear mud and dirt, therefore, the traction is improved.

The carcass 6 is composed of two carcass plies 6A and 6B, for example. The carcass plies 6A and 6B include carcass cords and a topping rubber that covers the carcass cords. The carcass cords are arranged at an angle of 75 degrees or more and 90 degrees or less with respect to the tire circumferential direction, for example. For the carcass cords, organic fiber cords such as nylon, polyester, or rayon are suitably used, for example.

The carcass 6 has a main body portion (6a) and turned up portions (6b). The main body portion (6a) extends between the bead cores 5 of the pair of the bead portions 4. Each of the turned up portions (6b) is connected with the main body portion (6a) and is turned up around the respective bead core 5 to extend outward in the tire radial direction. Each of the turned up portions (6b) of the present embodiment is turned up around the respective bead core 5 from the inside to the outside in the tire axial direction.

The tread portion 2 of the present embodiment includes a belt layer 7, for example. The belt layer 7 includes two belt plies 7A and 7B, for example. Each of the belt plies 7A and 7B includes belt cords arranged obliquely with respect to the tire circumferential direction, and a topping rubber covering the belt cords, for example. It is preferred that each of the belt cords is arranged at an angle of 10 degrees or more and 45 degrees or less with respect to the tire circumferential direction.

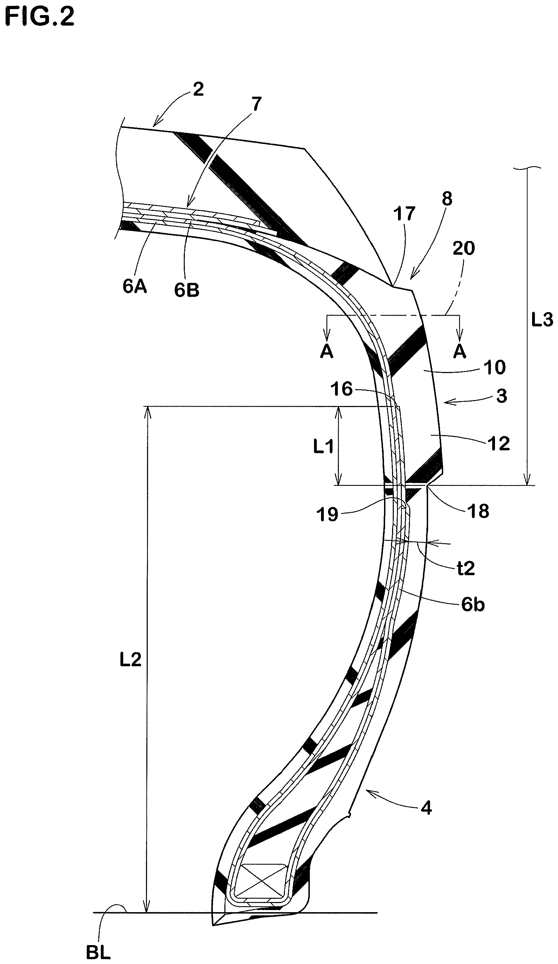

FIGURE 2 shows an enlarged view of one of the side wall portions 3 and one of the bead portions 4. As shown in FIGURE 2, in the sidewall portion 3 provided with the raised portions 10, the turned up portion (6b) is arranged so as to overlap with the raised portions 10 in the tire radial direction. Therefore, the cut resistance performance of the sidewall portions 3 is improved.

In the present invention, a length (L1) in the tire radial direction of an overlapping portion 12 of each of the turned up portions (6b) and the respective raised portions 10 is 5% or more and 40% or less of a tire section height (h1) (shown in FIGURE 1 and the same applies hereinafter). Thereby, the cut resistance performance on the radially inner side of the raised portions 10 is sufficiently improved, while end portions of the turned up portions (6b) are suppressed from being positioned excessively close to end portions in the tire axial direction of the tread portion 2 which deform largely, therefore, the durability of the tire is ensured. Further, by setting the upper limit of the length (L1) of the overlapping portion 12, it is possible that an excessive increase in the weight of the sidewall portions 3 is suppressed and eventually an increase in rolling resistance is suppressed.

It should be noted that the tire section height (h1) corresponds to a distance in the tire radial direction between a bead baseline (BL) in the standard state and an outer end (2t) (shown in FIGURE 1 and the same applies hereinafter) in the tire radial direction of the tread portion 2. It should be noted that the bead baseline (BL) means a tire axial direction line that passes through a rim diameter position specified for the concerned tire by a standard on which the tire is based

In order to further improve the cut resistance performance while suppressing the rolling resistance, the length (L1) of the overlapping portion 12 is preferably 8% or more, more preferably 10% or more, and preferably 20% or less, more preferably 15% or less of the tire section height (h1).

In the present embodiment, an outer end of one of the two carcass plies 6A and 6B (corresponding to an outer end 16 of the turned up portion (6b)) overlaps with the raised portions 10 in the tire radial direction, and an outer end 19 of the other carcass ply does not overlap with the raised portions 10 and is arranged radially inside the raised portions 10. In a preferred embodiment, each of distances in the tire circumferential direction between the outer end 19 of the other carcass ply and inner ends 18 of the raised portions 10 is preferably smaller than a minimum thickness of the sidewall portions 3. Thereby, a rigidity difference is less likely to occur in the vicinity of the inner ends 18 of the raised portions 10, therefore, local deformation of the sidewall portions 3 is suppressed.

In order to secure a distance between the outer end 16 of the turned up portion (6b) and an end portion of the belt layer 7, it is preferred that the outer end 16 of the turned up portion (6b) is arranged radially inside outer ends 17 in the tire radial direction of the raised portions 10. In a preferred embodiment, the outer end 16 of the turned up portion (6b) is arranged radially inside center positions in the tire radial direction of the raised portions 10. Thereby, damage to the sidewall portions 3 starting from the outer ends 16 of the turned up portions (6b) is suppressed.

More specifically, a distance (L2) in the tire radial direction between the bead baseline (BL) and the outer end 16 in the tire radial direction of the turned up portion (6b) is 77% or less, and more preferably 65% or less of the tire section height (h1). On the other hand, when the distance (L2) is small, it is necessary that the inner ends 18 in the tire radial direction of the raised portions 10 are arranged further radially inner side, therefore, it is possible that the rolling resistance is increased. Thereby, the distance (L2) is 55% or more, preferably 60% or more of the tire section height (h1).

Each of lengths in the tire radial direction of the raised portions 10 is 20% or more and 30% or less of the tire section height (h1), for example. A distance (L3) in the tire radial direction between the outer end (2t) in the tire radial direction of the tread portion 2 and the inner ends 18 in the tire radial direction of the raised portions 10 is 35% or more, and preferably 40% or more of the tire section height (h1). Thereby, the cut resistance performance is improved in an easily damaged region of the sidewall portions 3. On the other hand, when the distance (L3) is large, it is possible that the rolling resistance is increased. Therefore, the distance (L3) is 60% or less, and more preferably 55% or less of the tire section height (h1).

In the present embodiment, a plurality of the raised portions 10 is provided in the tire circumferential direction, and each of the raised portions 10 is formed so as to include a 75% position 20 (indicated by a two-dot chain line in FIGURE 2 and corresponding to A-A line) which is spaced radially outward away from the bead baseline (BL) by 75% of the tire section height (h1).

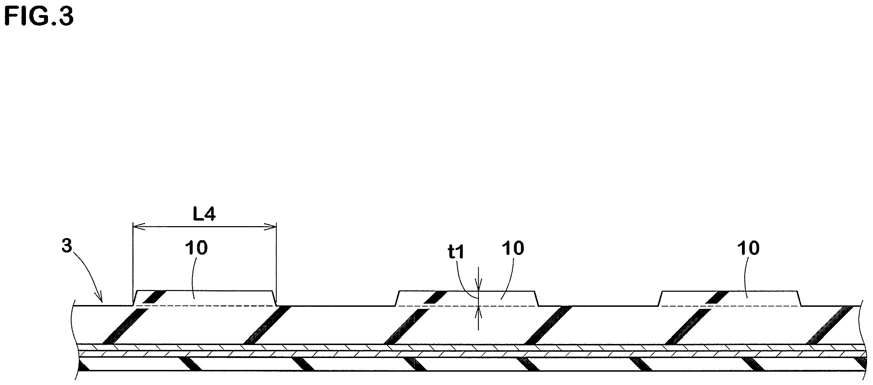

FIGURE 3 shows a cross-sectional view taken along A-A line of FIGURE 2. The cross-sectional view of FIGURE 3 shows a cross-section of the sidewall portion 3 taken along an imaginary plane extending along the tire circumferential direction passing through the 75% position 20. As shown in FIGURE 3, at the 75% position 20, a total ΣL4 of lengths (L4) in the tire circumferential direction of the raised portions 10 is preferably 30% or more, more preferably 50% or more, and preferably 80% or less, more preferably 70% or less of a circumferential length over the entire tire circumference at the 75% position 20. Such arrangement of the raised portions 10 can improve the cut resistance performance while maintaining the rolling resistance low.

In order to improve the cut resistance performance while suppressing the increase of the rolling resistance, it is preferred that each of thicknesses (t1) of the raised portions 10 from the reference profile is 2.0 mm or more and 5.0 mm or less, for example.

As shown in FIGURE 2, it is preferred that a minimum rubber thickness (t2) between an outer surface of the carcass 6 and the outer surface of each of the sidewall portions 3 of the present embodiment is 5% or less of the tire section height (h1). Thereby, the rolling resistance is maintained small.

While detailed description has been made of the pneumatic tire as a preferred embodiment of the present invention, the present invention can be embodied in various forms not limited to the illustrated embodiment but without departing from the scope defined in the appended claims.

### [Working examples (Examples)]

Pneumatic tires of size 265/70R17 having the basic structure shown in FIGURE 1 were made by way of test according to the specification listed in Table 1. As References, pneumatic tires were made by way of test in which the raised portions and the turned up portions did not overlap (that is, the tires did not have the overlapping portions). The tires in Examples and the tires in the References had substantially the same configuration except the presence or absence of the overlapping portions. Each of the test tires was tested for the cut resistance performance and the rolling resistance. The common specifications and the test methods for each of the test tires were as follows.
Tire rim: 17x8.0
Tire inner pressure: 220 kPa

### < Cut Resistance Performance >

The blade was pressed against the outer surface of the sidewall portion, and the energy at which the cut occurred was measured. The results are indicated by an index based on the energy of the Reference 1 being 100, wherein a larger numerical value shows the better cut resistance performance.

### < Rolling Resistance >

The rolling resistance was measured while the tires were run on a drum testing machine at a constant speed with a constant longitudinal load applied to the tires. The results are indicated by an index based on the Reference 1 being 100, wherein a smaller numerical value shows the smaller rolling resistance.

The test results are shown in Tables 1 and 2.

**Table 1**

| | | Ref. 1 | Ex.1 | Ex.2 | Ex.3 | Ex.4 | Ex. 5 | Ex.6 | Ex.7 | Ex.8 | Ref. 2 |
|---|---|---|---|---|---|---|---|---|---|---|---|
| Presence or Absence of Overlapping portion | | Absence | Presence | Presence | Presence | Presence | Presence | Presence | Presence | Presence | Presence |
| Length (L1) of Overlapping portion/ Tire section height (h1) [%] | | 0 | 10 | 5 | 15 | 20 | 25 | 30 | 35 | 40 | 42 |
| Distance (L2) between Bead baseline and Outer end of Turned up portion/ Tire section height (h1) [%] | | 40 | 63 | 58 | 65 | 68 | 70 | 73 | 75 | 77 | 77 |
| Distance (L3) between Outer end of Tread portion and Inner end of Raised portion/ Tire section height (h1) [%] | | 54 | 47 | 47 | 50 | 52 | 55 | 57 | 60 | 63 | 65 |
| Total ΣL4 of Circumferential lengths of Raised portions/ Circumferential length at 75% position [%] | | 60 | 60 | 60 | 60 | 60 | 60 | 60 | 60 | 60 | 60 |
| Cut resistance performance | [index] | 100 | 128 | 121 | 130 | 132 | 135 | 136 | 137 | 139 | 139 |
| Rolling resistance | [index] | 100 | 100 | 100 | 100 | 101 | 101 | 102 | 103 | 104 | 105 |

**Table 2**

| | | Ex.9 | Ex.10 | Ex. 11 | Ex. 12 |
|---|---|---|---|---|---|
| Presence or Absence of Overlapping portion | | Presence | Presence | Presence | Presence |
| Length (L1) of Overlapping portion/ Tire section height (h1) [%] | | 10 | 10 | 10 | 10 |
| Distance (L2) between Bead baseline and Outer end of Turned up portion/ Tire section height (h1) [%] | | 63 | 63 | 63 | 63 |
| Distance (L3) between Outer end of Tread portion and Inner end of Raised portion/ Tire section height (h1) [%] | | 47 | 47 | 47 | 47 |
| Total ΣL4 of Circumferential lengths of Raised portions/ Circumferential length at 75% position [%] | | 30 | 50 | 70 | 80 |
| Cut resistance performance | [index] | 118 | 125 | 130 | 136 |
| Rolling resistance | [index] | 98 | 99 | 101 | 102 |

From the test results, it was confirmed that the cut resistance performance was improved in the tires in the Examples. Further, it was also confirmed that the increase in the rolling resistance was suppressed in the tires in the examples.

### [Description of Reference Signs]

- 2: tread portion
- 3: sidewall portion
- 5: bead core
- 4: bead portion
- 6: carcass
- 6a: main body portion
- 6b: turned up portion
- 8: buttress portion
- 10: raised portion
- 12: overlapping portion
- h1: tire section height

## Claims

1. A pneumatic tire (1) comprising a tread portion (2), a pair of sidewall portions (3), a pair of bead portions (4) each having a bead core (5) embedded therein, and a carcass (6) extending between the bead portions (4) in a toroidal manner, wherein
a buttress portion (8) of at least one of the pair of the sidewall portions (3) is provided with at least one raised portion (10) protruding outward in a tire axial direction,
the carcass (6) includes a main body portion (6a) and a pair of turned up portions (6b),
the main body portion (6a) extends between the bead cores (5) of the pair of the bead portions (4),
each of the pair of the turned up portions (6b) is turned up around the respective bead core (5) to extend outward in a tire radial direction,
in the sidewall portion (3) which is provided with the at least one raised portion (10), the turned up portion (6b) is arranged so as to overlap with the raised portion (10) in the tire radial direction, and
a length (L1) in the tire radial direction of an overlapping portion (12) of the turned up portion (6b) and the raised portion (10) is 5 % or more and 40 % or less of a tire section height (h1),
**characterized in that** the at least one of the pair of the sidewall portions (3) is provided with a plurality of the raised portions (10) arranged in the tire circumferential direction, each of the raised portions (10) is formed so as to include a 75 % position which is spaced away radially outward from a bead baseline (BL) by 75 % of the tire section height (h1), and a total of lengths in the tire circumferential direction of the raised portions (10) is 30 % or more and 80 % or less of a circumferential length at the 75 % position.

2. The pneumatic tire (1) according to claim 1, wherein
in each of the sidewall portions (3), a distance (L2) in the tire radial direction between the bead baseline (BL) and an outer end (16) in the tire radial direction of the respective turned up portion (6b) is 77 % or less of the tire section height (h1).

3. The pneumatic tire (1) according to claim 1 or 2, wherein
a distance (L3) in the tire radial direction between an outer end (2t) in the tire radial direction of the tread portion (2) and an inner end (18) in the tire radial direction of the raised portion (10) is 35 % or more of the tire section height (h1).

4. The pneumatic tire (1) according to any one of claims 1 to 3, wherein
a minimum rubber thickness (t2) between an outer surface of the carcass (6) and an outer surface of each of the sidewall portions (3) is 5 % or less of the tire section height (h1).

5. The pneumatic tire (1) according to any one of claims 1 to 4, wherein
the at least one raised portion (10) protrudes outward in the tire axial direction from a reference profile of the at least one of the pair of the sidewall portions (3), and
a thickness of the raised portion (10) from the reference profile is 2.0 mm or more and 5.0 mm or less.

## Patentansprüche

1. Luftreifen (1), umfassend einen Laufflächenabschnitt (2), ein Paar Seitenwandabschnitte (3), ein Paar Wulstabschnitte (4), die jeweils einen darin eingebetteten Wulstkern (5) aufweisen, und eine Karkasse (6), die sich zwischen den Wulstabschnitten (4) auf eine torusförmige Weise erstreckt, wobei
ein Stützabschnitt (8) von mindestens einem des Paares Seitenwandabschnitte (3) mit mindestens einem erhabenen Abschnitt (10) versehen ist, der in einer Reifenaxialrichtung nach außen vorsteht,
die Karkasse (6) einen Hauptkörperabschnitt (6a) und ein Paar Umschlagabschnitte (6b) umfasst,
der Hauptkörperabschnitt (6a) sich zwischen den Wulstkernen (5) des Paares Wulstabschnitte (4) erstreckt,
jeder des Paares Umschlagabschnitte (6b) um den jeweiligen Wulstkern (5) umgeschlagen ist, so dass er sich in einer Reifenradialrichtung nach außen erstreckt,
in dem Seitenwandabschnitt (3), der mit dem mindestens einen erhabenen Abschnitt (10) versehen ist, der Umschlagabschnitt (6b) so angeordnet ist, dass er den erhabenen Abschnitt (10) in der Reifenradialrichtung überlappt, und
eine Länge (L1) in der Reifenradialrichtung eines überlappenden Abschnitts (12) des Umschlagabschnitts (6b) und des erhabenen Abschnitts (10) 5 % oder mehr und 40 % oder weniger einer Reifenquerschnittshöhe (h1) beträgt,
**dadurch gekennzeichnet, dass** mindestens einer des Paares Seitenwandabschnitte (3) mit einer Vielzahl von erhabenen Abschnitten (10) versehen ist, die in der Reifenumfangsrichtung angeordnet sind, jeder der erhabenen Abschnitte (10) so ausgebildet ist, dass er eine 75 %-Position einschließt, die radial nach außen hin von einer Wulstgrundlinie (BL) um 75 % der Reifenquerschnittshöhe (h1) beabstandet ist, und die Summe von Längen der erhabenen Abschnitte (10) in der Reifenumfangsrichtung 30 % oder mehr und 80 % oder weniger einer Umfangslänge an der 75 %-Position beträgt.

2. Luftreifen (1) nach Anspruch 1, wobei in jedem der Seitenwandabschnitte (3) ein Abstand (L2) in der Reifenradialrichtung zwischen der Wulstgrundlinie (BL) und einem äußeren Ende (16) in der Reifenradialrichtung des jeweiligen Umschlagabschnitts (6b) 77 % oder weniger der Reifenquerschnittshöhe (h1) beträgt.

3. Luftreifen (1) nach Anspruch 1 oder 2, wobei ein Abstand (L3) in der Reifenradialrichtung zwischen einem äußeren Ende (2t) in der Reifenradialrichtung des Laufflächenabschnitts (2) und einem inneren Ende (18) in der Reifenradialrichtung des erhabenen Abschnitts (10) 35 % oder mehr der Reifenquerschnittshöhe (h1) beträgt.

4. Luftreifen (1) nach einem der Ansprüche 1 bis 3, wobei eine minimale Gummidicke (t2) zwischen einer Außenfläche der Karkasse (6) und einer Außenfläche jedes der Seitenwandteile (3) 5 % oder weniger der Reifenquerschnittshöhe (h1) beträgt.

5. Luftreifen (1) nach einem der Ansprüche 1 bis 4, wobei
der mindestens eine erhabene Abschnitt (10) in der Reifenaxialrichtung von einem Bezugsprofil des mindestens einen des Paares Seitenwandabschnitte (3) nach außen vorsteht, und
eine Dicke des erhabenen Abschnitts (10) gegenüber dem Bezugsprofil 2,0 mm oder mehr und 5,0 mm oder weniger beträgt.

## Revendications

1. Bandage pneumatique (1) comprenant une portion formant bande de roulement (2), une paire de portions formant parois latérales (3), une paire de portions de talon (4) ayant chacune une âme de talon (5) enchâssée à l'intérieur, et une carcasse (6) s'étendant entre les portions de talon (4) d'une manière toroïdale, dans lequel
une portion de contrefort (8) de l'une au moins de la paire de portions formant parois latérales (3) est dotée d'au moins une portion surélevée (10) qui se projette vers l'extérieur dans une direction axiale du pneumatique,
la carcasse (6) inclut une portion formant corps principal (6a) et une paire de portions retroussées (6b),
la portion formant corps principal (6a) s'étend entre les âmes de talon (5) de la paire de portions de talon (4),
chacune de la paire de portions retroussées (6b) est retroussée autour de l'âme de talon (5) respective pour s'étendre vers l'extérieur dans une direction radiale du pneumatique,
dans la portion formant paroi latérale (3) qui est dotée de ladite au moins une portion surélevée (10), la portion retroussée (6b) est agencée de manière à être en chevauchement avec la portion surélevée (10) dans la direction radiale du pneumatique, et
une longueur (L1) dans la direction radiale du pneumatique d'une portion en chevauchement (12) de la portion retroussée (6b) et de la portion surélevée (10) est de 5 % ou plus et 40 % ou moins d'une hauteur de section de pneumatique (h1),
**caractérisé en ce que** ladite au moins une de la paire de portions formant parois latérales (3) est dotée d'une pluralité de portions retroussées (10) agencées dans la direction circonférentielle du pneumatique, chacune des portions retroussées (10) est formée de manière à inclure une position de 75 % qui est espacée en éloignement radial vers l'extérieur par rapport à une ligne de base de talon (BL) à raison de 75 % de la hauteur de section de pneumatique (h1), et un total des longueurs dans la direction circonférentielle du pneumatique des portions retroussées (10) est de 30 % ou plus et de 80 % ou moins d'une longueur circonférentielle au niveau de la position de 75 %.

2. Bandage pneumatique (1) selon la revendication 1, dans lequel
dans chacune des portions formant parois latérales (3), une distance (L2) dans la direction radiale du pneumatique entre la ligne de base de talon (BL) et une extrémité extérieure (16) dans la direction radiale du pneumatique de la portion retroussée (6b) respective est de 77 % ou moins de la hauteur de section de pneumatique (h1).

3. Bandage pneumatique (1) selon la revendication 1 ou 2, dans lequel une distance (L3) dans la direction radiale du pneumatique entre une extrémité extérieure (2t) dans la direction radiale du pneumatique de la portion formant bande de roulement (2) et une extrémité intérieure (18) dans la direction radiale du pneumatique de la portion surélevée (10) est de 35 % ou plus de la hauteur de section de pneumatique (h1).

4. Bandage pneumatique (1) selon l'une quelconque des revendications 1 à 3, dans lequel
une épaisseur de caoutchouc minimum (t2) entre une surface extérieure de la carcasse (6) et une surface extérieure de chacune des portions formant parois latérales (3) est de 5 % ou moins de la hauteur de section de pneumatique (h1).

5. Bandage pneumatique (1) selon l'une quelconque des revendications 1 à 4, dans lequel
ladite au moins une portion surélevée (10) se projette vers l'extérieur dans la direction axiale du pneumatique par rapport à un profil de référence de ladite au moins une de la paire de portions formant parois latérales (3), et
une épaisseur de la portion surélevée (10) par rapport au profil de référence est de 2,0 mm ou plus et de 5,0 mm ou moins.
